# EUROPEAN PATENT SPECIFICATION

(11) **EP 3 083 788 B1**
(45) Date of publication and mention of the grant of the patent: **24.03.2021**
(21) Application number: 14815673.0
(22) Date of filing: 17.12.2014
(51) Int. Cl.: C08K 3/00, C08K 3/28

(54) **METHOD FOR RECOVERING OIL/GAS USING AN ARTICLE MADE FROM BN-FILLED PAEK**
METHODE ZUR ÖL- UND GASGEWINNUNG UNTER NUTZUNG EINES ARTIKELS AUS BN-GEFÜLLTEN PAEK
METHODE POUR LA RECUPERATION DU PETROLE OU DU GAZ EN UTILISANT UN ARTICLE COMPRENANT DU PAEK REMBLAYÉ PAR BN

(30) Priority: 18.12.2013 US 201361917614 P; 17.04.2014 EP 14165228
(43) Date of publication of application: 26.10.2016
(73) Proprietor: Solvay Specialty Polymers USA, LLC., Alpharetta, GA 30005-3914 (US)
(72) Inventor: EL-HIBRI, Mohammad Jamal, Atlanta, Georgia 30350 (US)
(74) Representative: Benvenuti, Federica
(86) International application number: PCT/EP2014/078113
(87) International publication number: WO 2015/091588

(56) References cited:
- CN-A- 101 157 796
- US-A- 5 844 036
- US-A1- 2002 195 739
- US-A1- 2003 181 560
- US-A1- 2012 196 113
- US-A1- 2013 032 411

## Description

### Field of invention

The present invention is related to the use in oil/gas recovery industries of an article comprising at least one structural part made by injection molding a poly(aryletherketone) polymer composition wherein said injection molded structural part of said poly(aryletherketone) polymer composition is characterized by having improved mechanical properties, in particular high stiffness and high toughness, increased dielectric strength, dimensional stability and good aesthetical properties.

### Background of the invention

High performance polymers are more and more needed in the Oil and Gas industries as currently, the easy-to-reach oil fields become less and less productive and harder-to-reach oil fields need more and more to be exploited. Said harder-to-reach oil fields are often associated with the most challenging operating environments, such as much of which is deep under the ocean and under high pressure.

It is a critical challenge for the oil and gas market that articles including high performance polymers suitable for use in oil and gas recovery application, for example as notably used in high pressure and high temperature [HP/HT, used herein after] deepwater oil and gas recovery applications, resist these extreme conditions of being exposed in a prolonged fashion to high pressure, e.g. pressures higher than 207 MPa (30,000 psi), high temperatures e.g. temperatures up to 260°C to 300°C and to harsh chemicals including acids, bases, superheated water/steam, and of course a wide variety of aliphatic and aromatic organics. For example, enhanced oil recovery techniques involve injecting of fluids such as notably water, steam, hydrogen sulfide (H₂S) or supercritical carbon dioxide (sCO₂) into the well. In particular, sCO₂ having a solvating effect similar to n-heptane, can cause swelling of materials in for instance seals, which affect consequently their performance.

Additionally, the electrical performance of certain oil and gas article parts such as for example electrical connectors, switches, circuit breakers, housings, wire and cables and the like, also need to be challenged in these extreme conditions, as described above.

Thus, in the development of oil and gas recovery articles including polymeric materials, the selection of said polymeric materials is of ultimate importance as it implies that said polymeric compositions need to possess some critical properties in order to resist the extreme conditions associated with the above mentioned severe operating conditions of high temperature, harsh chemicals and other extreme conditions.

For example, semi-crystalline polyaryletherketone (PAEK) polymers could be regarded as such polymeric materials as they are known for their exceptional balance of technical properties, namely high melting point, good thermal stability, good stiffness and strength, good toughness and really excellent chemical resistance. This being said, PEEK being an outstanding high performance engineering thermoplastic, the relatively low glass transition temperatures (Tg) of these semi-crystalline polyaryletherketone (PAEK) polymers limits their use at very high temperature and the electrical insulative properties of PEEK are not much differentiated from most other engineering plastics.

It is known that by the addition of reinforcing fillers to said (PAEK) polymers can mitigate these deficiencies.

For example, 30 % glass fiber reinforced PEEK has a dielectric strength of about 10 % higher than neat PEEK.

It is also generally known that the stiffness of (PAEK) polymers can be increased by adding stiff materials such as reinforcing fillers, in particular glass fibers or carbon fibers but it has some drawbacks such as notably that said reinforced compositions often turn brittle.

Another disadvantage of reinforcements like glass fibers and carbon fibers is the well known anisotropy effect of these materials. The anisotropic nature of bulk fiber reinforced plastics like glass fiber and carbon fiber, for example is that the composition has non-uniform properties over the various locations of the part, depending on how the fibers are oriented. Strength and stiffness properties are very high in the direction of flow or direction of alignment of the fibers and much weaker properties are realized perpendicular to the orientation of these fibers. The strong anisotropy just mentioned also leads to warpage issues in injection molded parts as different portions or dimensions of the part may shrink differently depending on the state of fiber alignment in that particular direction.

Particularly, in large oil and gas recovery articles such as notably cabling components which have to withstand the stress of their own weight at extreme depths, the polymeric materials need to be as low in specific gravity as possible. In these cases, the use of a glass fiber reinforced resin with a relatively high loading of glass reinforcement (i.e. 20 % or more) can become disadvantageous from a unit weight and mobility standpoint as these reinforcements significantly increase the density of the composition relative to the corresponding unfilled polymer. Carbon fiber can mitigate this effect due to its lower density relative to glass fiber, but on the other hand carbon fiber-reinforced plastics have some level of electrical conductivity which can be a problem in end uses where good electrical insulation is desired.

Thus, there is still a high need for of articles suitable for use in oil and gas recovery applications, and wherein said compositions possesses the critical properties as mentioned above and thus features excellent mechanical properties, in particular having an excellent balance of stiffness and ductility over a broad range of temperature (i.e. from about 25°C until 300°C), good processability, high chemical resistance, high thermal resistance, increased dielectric strength and long term thermal stability, and wherein final articles comprising said compositions having all these improved properties, as mentioned above.

US2002/195739 describes methods of manufacturing a sealing or an anti-extrusion component for use in a downhole tools, including formation of the component from a composition that contains a polyetherketoneketone or a derivative of a polyetherketoneketone.

### Summary of invention

The present invention addresses the above detailed needs and relates to a method for recovering oil and/or gas, as further detailed in Claim 1, including using at least one oil and gas recovery article comprising at least one part made from injection molding a composition [composition (C)] consisting essentially of :
- from 50 to 99.5 % by weight (wt. %) of at least one polyaryletherketone polymer [(PAEK) polymer, herein after];
- from 0.5 to 15 % by weight (wt. %) of at least one nitride (NI) of an element having an electronegativity (ε) of from 1.3 to 2.5, as listed in « Handbook of Chemistry and Physics », CRC Press, 64th edition, pages B-65 to B-158; and
- from 0 to 35 % by weight (wt. %) of at least one optional ingredient selected from the group consisting of colorants, pigments, light stabilizers, heat stabilizers, antioxidants, acid scavengers, processing aids, nucleating agents, internal lubricants and/or external lubricants, flame retardants, smoke-suppressing agents, anti-static agents, anti-blocking agents, conductivity additives and reinforcing additives; and all wt. % are relative to the total weight of the composition (C),
wherein the nitride (NI) is boron nitride, the average particle size of said nitride (NI) is equal to or below 30 µm, and wherein the total weight of the nitride (NI) in the composition (C) ranges from 1 to 13 % wt., based on the total weight of the composition (C).

As it will be explained in more detail in the specification, with reference notably to the working experiments, the Applicant has surprisingly found that the addition of the nitride (NI) to (PAEK) polymers, as detailed above, is particularly effective in boosting the mechanical performance of the unfilled (PAEK) polymers and in particular, in greatly increasing the dielectric strength of unfilled (PAEK) polymers (e.g. to about 75 % increase) and that over a large temperature range up to very high temperature of about 300°C when said composition is processed by injection molding. The Applicant has found surprisingly that the addition of the nitride (NI) to (PAEK) polymers, followed by processing via injection molding techniques, is effective in enhancing the stiffness, in particular the Young's modulus, while maintaining the ductility of an unfilled PAEK polymer and that both at low temperatures as well as elevated temperatures, along with high tensile break elongations and high impact resistance, notably exemplified by high instrumented (Dynatup) impact values, so as to render articles made from injection molding said composition (C) particularly adapted for use in the in oil and gas recovery applications, in particular in HP/HT conditions.

Additionally, the Applicant has also found that the addition of the nitride (NI) to (PAEK) polymers, as detailed above, is also effective in reducing the coefficient of linear thermal expansion (CLTE) of parts obtained by injection molding the unfilled (PAEK) polymers, and hence increasing dimensional stability towards temperature. This being said, the reduced CLTE results in greater dimensional stability during thermal cycling and assures that lower thermally induced stresses are developed under the wide temperature swings expected during the operation of oil and gas recovery articles.

### Brief Description of the drawings

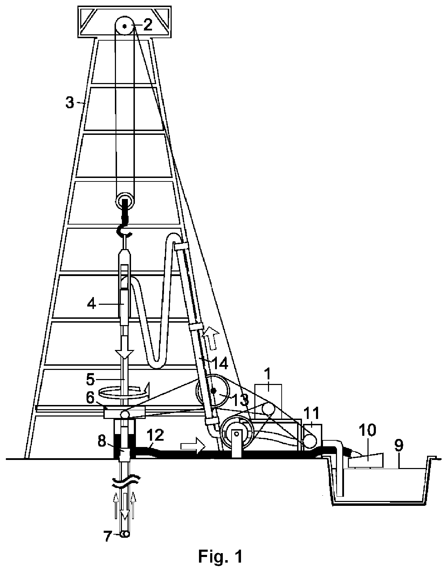

Figure 1 schematically depicts drilling rig equipment.

### The oil and gas recovery article

To the purposes of the invention, the term "oil and gas recovery article" is intended to denote any article that is designed to conveniently be used in oil and gas recovery applications, in particular in HP/HT conditions.

For the sake of clarity, the term "part of an oil and gas recovery article" is intended to denote a piece or portion which is combined with others to make up the whole oil and gas recovery article.

Representative examples of oil and gas recovery applications, but not limited to, include (i) drilling and completion of deep, higher temperature, higher pressure oil and gas wells, as notably described in U.S. Pat. No. 5,662,170, (ii) an oil and gas recovery method as traditionally subdivided in three stages, namely a primary oil recovery stage, a secondary or assisted oil recovery and a tertiary or enhanced oil recovery stage (iii) gas and oil gathering treatment applications, (iv) complex transportation of gas and oil from said deep, higher temperature, higher pressure wells to refineries and the like.

All these applications as herein mentioned above, are well familiar to the skilled person, and should be understood under their common meaning.

As non limitative examples of oil and gas recovery articles useful in the present invention are drilling systems; as notably described in U.S. Pat. No. 2001/0214920 A1; drilling rigs; compressor systems, as notably described in U.S. Pat. No. 2010/0239441 A1; pumping systems; motor systems, sensors, such as reservoir sensors; control systems, such as temperature and/or pressure; stimulation and flow control systems; liner hanger systems, as notably described in U.S. Pat. No. 6,655,456 B1; packer systems, as notably described in U.S. Pat. No. 7,874,356 B2, pipe systems, valve systems, tubing systems, casing systems, and others.

All these systems as herein mentioned above, are well familiar to the skilled person, and should be understood under their common meaning.

By the term "drilling rig" is meant structural housing equipment that is used to drill oil wells, or natural gas extraction wells, and may comprise a single article or comprise two or more components. Typically components of said drilling rig include, but not limited to, mud tanks, shale shakers, mud pumps, drill pipes, drill bits, drilling lines, electric cable trays.

As non limitative examples of pumping systems useful in the present invention are jet pump systems, submersible pumping systems, in particular electric submersible pumps, as notably described in U.S. Pat. No. 6,863,124 B2 the entire disclosure of which is incorporated herein by reference, beam pumps.

As non limitative examples of motor systems useful in the present invention are mud motor assemblies, as notably described in U.S. Pat. No. 2012/0234603 A1.

As non limitative examples of pipe systems useful in the present invention, mention can be made of pipes including rigid pipes and flexible pipes, flexible risers, pipe-in-pipe, pipe liners, subsea jumpers, spools, umbilicals.

Typical flexible pipes assemblies have been described by way of example in WO 01/61232, U.S. Pat. No. 6,123,114 and U.S. Pat. No. 6,085,799. Such flexible pipes assemblies can notably be used for the transport of fluids where very high or very different water pressure prevails over the length of the pipe, and for example can take the form of flexible risers which run from the ocean floor up to equipment at or in the vicinity of the ocean surface, and they can also generally be used as pipes for the transport of liquids or gases between various items of equipment, or as pipes laid at great depth on the ocean floor, or as pipes between items of equipment close to the ocean surface, and the like.

Preferred pipe systems are pipes, flexible risers and pipe liners.

By the term "valves" is meant any device for halting or controlling the flow of a liquid, gas, or any other material through a passage, pipe, inlet, outlet, and the like. As non limitative examples of valve systems useful in the present invention, mention can especially be made of choke valves, thermal expansion valves, check valves, ball valve, butterfly valve, diaphragm valve, gate valve, globe valve, knife valve, needle valve, pinch valve, piston valve, plug valve, poppet valve, spool valve, pressure reducing valve, sampling valves, safety valve.

The at least one part of the oil and gas recovery articles according to the present invention may be selected from a large list of articles such as fitting parts; such as seals, in particular sealing rings, preferably backup seal rings, fasteners and the like; snap fit parts; mutually moveable parts; functional elements, operating elements; tracking elements; adjustment elements; carrier elements; frame elements; switches; circuit breakers; connectors, in particular electrical connectors; a wire, preferably, a wire coating and a cable, bearings, housings, compressor components such as compressor valves and compressor plates, any other structural part other than housings as used in an oil and gas recovery articles, such as for example shafts, shells, pistons.

In one preferred embodiment, the at least one part of the oil and gas recovery article according to the present invention, is advantageously an oil and gas recovery housing, an electrical connector, a switch, a circuit breaker.

By "oil and gas recovery housing" is meant one or more of the back cover, front cover, frame and/or backbone of an oil and gas recovery article. The housing may be a single article or comprise two or more components. By "backbone" is meant a structural component onto which other components of the oil and gas recovery article, are mounted. The backbone may be an interior component that is not visible or only partially visible from the exterior of the oil and gas recovery article.

Typical fasteners have been described by way of example in WO 2010/112435, and include, but not limited to, threaded fasteners such as bolts, nuts, screws, headless set screws, scrivets, threaded studs and threaded bushings, and unthreaded fastener, such as notably pins, retaining rings, rivets, brackets and fastening washers and the like.

Sealing of components of oil and gas recovery articles is important and it can be said that seals are used in all types of oil and gas recovery articles, as well as those used in parts of oil and gas recovery articles which remains in the well after completion, testing and production of the well. Thus the seals need to resist to these extreme conditions, as mentioned above, in substantially indefinite time. It is worthwhile mentioning that seals besides electronics can be considered as the most vulnerable parts of oil and gas recovery articles.

In one embodiment of the present invention, the at least part of an oil and gas recovery article is a seal wherein said seal is selected from a group consisting of a metal seal, an elastomeric seal, a metal-to-metal seal and an elastomeric and metal-to-metal seal.

Seals are typically used in drill bits, motor systems, in particular mud motors, reservoir sensors, stimulation and flow control systems, pump systems, in particular electric submersible pumps, packers, liner hangers, tubing's, casings and the like.

Representative examples of seals, but not limited to, include seal rings such as notably C-rings, E-rings, O-rings, U-rings, spring energized C-rings, backup rings and the like; fastener seals; piston seals, gask-O-seals; integral seals, labyrinth seals.

In a particularly preferred embodiment, the at least one part of the oil and gas recovery article according to the present invention, is a seal ring, preferably a backup seal ring.

The weight of composition (C), based on the total weight of oil and gas recovery article, is usually above 1 %, above 5 %, above 10 %, preferably above 15 %, above 20 %, above 30 %, above 40 %, above 50 %, above 60 %, above 70 %, above 80 %, above 90 %, above 95 %, above 99 %.

The oil and gas recovery article may consist of one part, i.e. it is a single-component article. According to said embodiments, the single part preferably consists of the composition (C).

Alternatively, and more generally, the oil and gas recovery article may consist of several parts. The case being, either one part or several parts of the oil and gas recovery article may consist of the composition (C). When several parts of the oil and gas recovery article consist of the composition (C), each of them may consist of the very same composition (C); alternatively, at least two of them may consist of different the compositions (C), in accordance with the invention.

### The method of recovering oil and/or gas using the oil and gas recovery article

It is hereby provided a method for recovering oil and/or gas including using at least one oil and gas recovery article as defined above.

The method of the invention is a method for recovering oil and/or gas from a subterranean formation including using said oil and gas recovery article.

The subterranean formations can be advantageously deeply buried reservoir, wherein temperatures close to 300C at a depth of more than 6,000 meters and pressures of over 1,500 bar can be encountered: the said oil and gas articles of the invention possess all the requisites and properties for being qualified to withstand this below-ground inferno over long periods of time.

The method of the invention comprises at least one of the operations selected from the group consisting of :
(a) drilling at least one borehole for exploring or exploiting an oil and/or gas reservoir in a subterranean formation using at least one oil and gas recovery article as defined above;
(b) completing at least one well using at least one oil and gas recovery article as defined above;
(c) transporting oil and/or gas from an oil and/or gas reservoir in a subterranean formation to the ground level.

The operation of drilling boreholes for exploring or exploiting oil and/or natural gas reservoirs generally includes the use of drilling rig equipment, which is an embodiment of the oil and gas recovery article as defined above.

Figure 1 schematically depicts drilling rig equipment. In this equipment a drill pipe or string (#5) acts as a conduit for a drilling fluid; it is generally made of joints of hollow tubing connected together and stood in the derrick vertically. A drill bit (#7) device is attached to the end of the drill string; this bit breaks apart the rock being drilled. It also contains jets through which the drilling fluid exits. The rotary table (#6) or a top drive (not shown) rotates the drill string along with the attached tools and bit.

A mechanical section or draw-works section (#13) contains the spool, whose main function is to reel in/out the drill line to raise/lower the travelling block.

A mud pump (#11) is used to circulate drilling fluid through the system; the mud is suctioned from the mud tank or mud pit (#9) which provides a reserve store of drilling fluid. The mud flows through the conduit #14 and through the drill pipe (#5) down to the bit (#7). Loaded with drill cuttings it flows upwards in the borehole and is extracted through the conduit (#12) back to the mud pit. A shale shaker (#10) separates drill cuttings from the drilling fluid before it is pumped back down the borehole.

The equipment can further comprise devices installed at the wellhead to prevent fluids and gases from unintentionally escaping from the borehole (not shown).

Any of the components of the drilling rig as above detailed maybe an oil and gas recovery article, as above detailed, i.e. may comprise at least a part obtained by injection molding the composition (C), as above defined.

The operation b) of completing a well is the operation comprehensive of all the preparation or outfitting operations required for bringing in operations a geologic formation from the wellbore. This principally involves preparing the bottom of the hole to the required specifications, running in the production tubing and its associated down hole tools and controlling devices as well as perforating and stimulating as required. Sometimes, the process of running in and cementing the casing is also included. In all these single operations, articles comprising at least one part comprising the (t-PAES) polymeric material as above detailed can be used.

### The polyaryletherketone polymer

Within the context of the present invention the mention "at least one polyaryletherketone polymer [(PAEK) polymer]" is intended to denote one or more than one (PAEK) polymer. Mixtures of (PAEK) polymer can be advantageously used for the purposes of the invention.

In the rest of the text, the expressions "(PAEK) polymer" are understood, for the purposes of the present invention, both in the plural and the singular, that is to say that the inventive composition may comprise one or more than one (PAEK) polymer.

For the purpose of the invention, the term "polyaryletherketone (PAEK)" is intended to denote any polymer, comprising recurring units, more than 50 % moles of said recurring units are recurring units (R_{PAEK}) comprising a Ar-C(O)-Ar' group, with Ar and Ar', equal to or different from each other, being aromatic groups. The recurring units (R_{PAEK}) are generally selected from the group consisting of formulae (J-A) to (J-O), herein below : 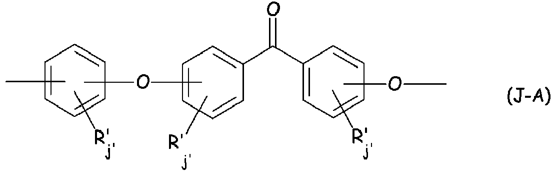 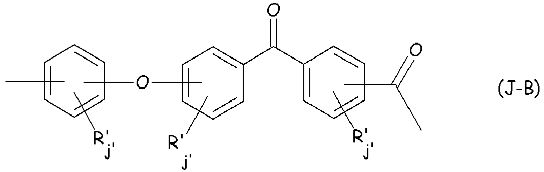 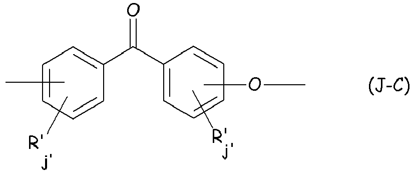 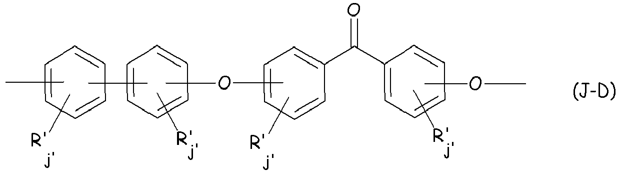 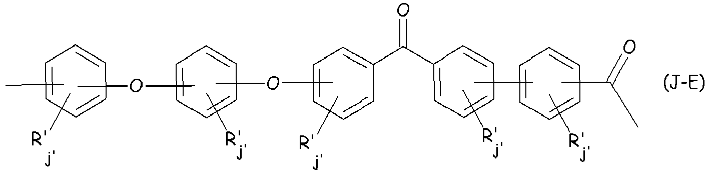 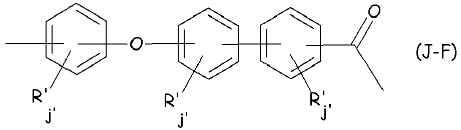 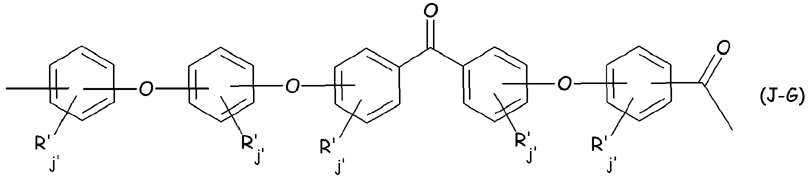 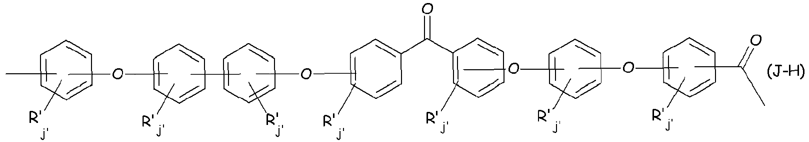 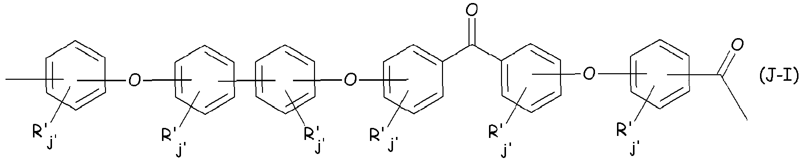 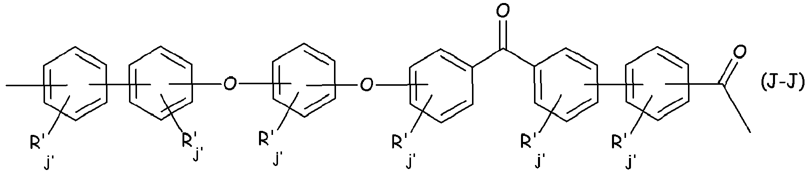 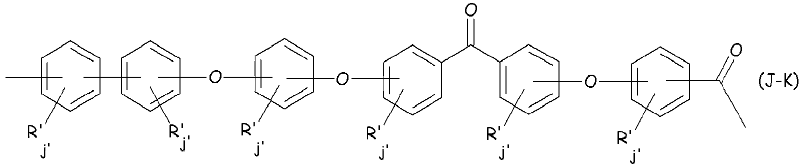 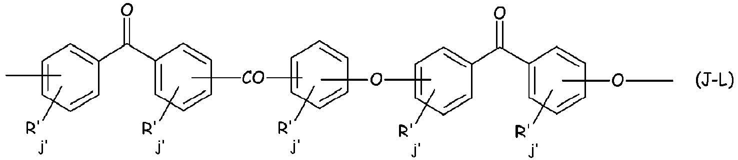 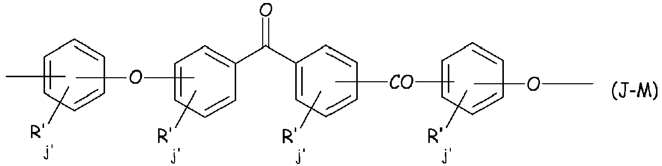 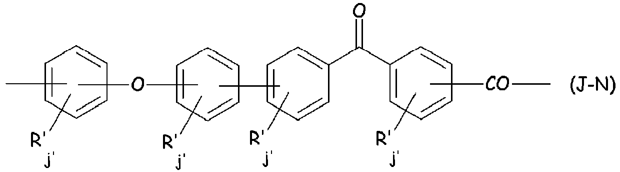 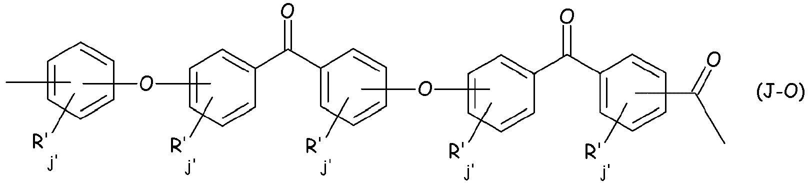 wherein :
- each of R', equal to or different from each other, is selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium ;
- j' is zero or is an integer from 0 to 4.

In recurring unit (R_{PAEK}), the respective phenylene moieties may independently have 1,2-, 1,4- or 1,3 -linkages to the other moieties different from R' in the recurring unit. Preferably, said phenylene moieties have 1,3- or 1,4- linkages, more preferably they have 1,4-linkage.

Still, in recurring units (R_{PAEK}), j' is at each occurrence zero, that is to say that the phenylene moieties have no other substituents than those enabling linkage in the main chain of the polymer.

Preferred recurring units (R_{PAEK}) are thus selected from those of formulae (J'-A) to (J'-O) herein below :

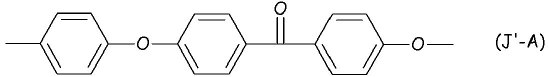

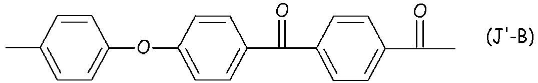

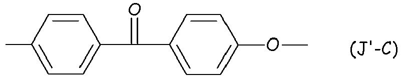

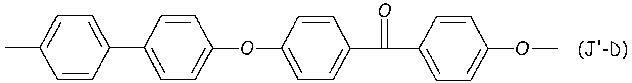

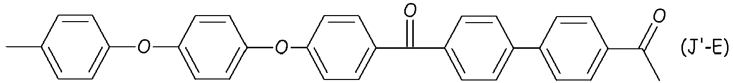

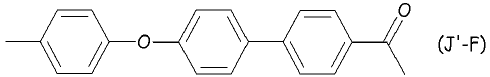

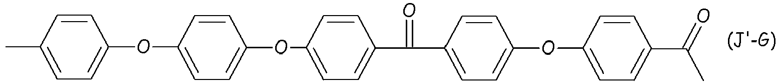

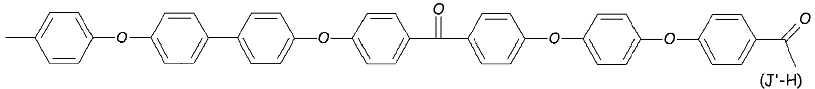

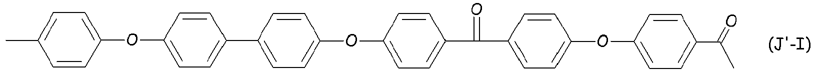

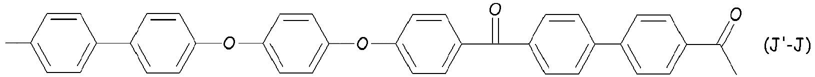

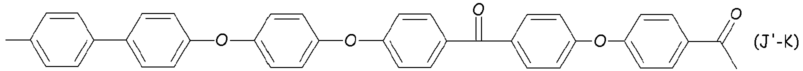

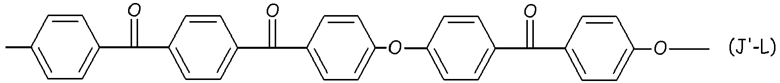

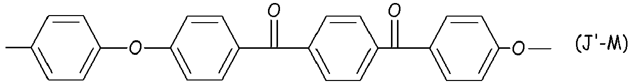

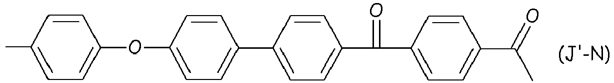

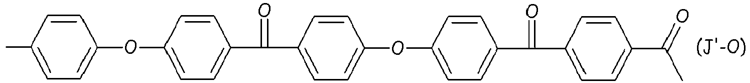

In the (PAEK) polymer, as detailed above, preferably more than 60 %, more preferably more than 80 %, still more preferably more than 90 % moles of the recurring units are recurring units (R_{PAEK}), as above detailed.

Still, it is generally preferred that substantially all recurring units of the (PAEK) polymer are recurring units (R_{PAEK}), as detailed above ; chain defects, or very minor amounts of other units might be present, being understood that these latter do not substantially modify the properties of (R_{PAEK}).

The (PAEK) polymer may be notably a homopolymer, a random, alternate or block copolymer. When the (PAEK) polymer is a copolymer, it may notably contain (i) recurring units (R_{PAEK}) of at least two different formulae chosen from formulae (J-A) to (J-O), or (ii) recurring units (R_{PAEK}) of one or more formulae (J-A) to (J-O) and recurring units (R*_{PAEK}) different from recurring units (R_{PAEK}).

As will be detailed later on, the (PAEK) polymer may be a polyetheretherketone polymer [(PEEK) polymers, herein after]. Alternatively, the (PAEK) polymer may be a polyetherketoneketone polymer [(PEKK) polymer, herein after], a polyetherketone polymer [(PEK) polymer, hereinafter], a polyetheretherketoneketone polymer [(PEEKK) polymer, herein after], or a polyetherketoneetherketoneketone polymer [(PEKEKK) polymer, herein after].

The (PAEK) polymer may also be a blend composed of at least two different (PAEK) polymers chosen from the group consisting of (PEKK) polymers, (PEEK) polymers, (PEK) polymers, (PEEKK) polymers and (PEKEKK) polymers, as above detailed.

For the purpose of the present invention, the term "(PEEK) polymer" is intended to denote any polymer of which more than 50 % by moles of the recurring units are recurring units (R_{PAEK}) of formula J'-A.

Preferably more than 75 % by moles, preferably more than 85 % by moles, preferably more than 95 % by moles, preferably more than 99 % by moles of the recurring units of the (PEEK) polymer are recurring units of formula J'-A. Most preferably all the recurring units of the (PEEK) polymer are recurring units of formula J'-A.

For the purpose of the present invention, the term "(PEKK) polymer" is intended to denote any polymer of which more than 50 % by moles of the recurring units are recurring units (R_{PAEK}) of formula J'-B.

Preferably more than 75 % by moles, preferably more than 85 % by moles, preferably more than 95 % by moles, preferably more than 99 % by moles of the recurring units of the (PEKK) polymer are recurring units of formula J'-B. Most preferably all the recurring units of the (PEKK) polymer are recurring units of formula J'-B.

For the purpose of the present invention, the term "(PEK) polymer" is intended to denote any polymer of which more than 50 % by moles of the recurring units are recurring units (R_{PAEK}) of formula J'-C.

Preferably more than 75 % by moles, preferably more than 85 % by moles, preferably more than 95 % by moles, preferably more than 99 % by moles of the recurring units of the (PEK) polymer are recurring units of formula J'-C. Most preferably all the recurring units of the (PEK) polymer are recurring units of formula J'-C.

For the purpose of the present invention, the term "(PEEKK) polymer" is intended to denote any polymer of which more than 50 % by moles of the recurring units are recurring units (R_{PAEK}) of formula J'-M.

Preferably more than 75 % by moles, preferably more than 85 % by moles, preferably more than 95 % by moles, preferably more than 99 % by moles of the recurring units of the (PEEKK) polymer are recurring units of formula J'-M. Most preferably all the recurring units of the (PEEKK) polymer are recurring units of formula J'-M.

For the purpose of the present invention, the term "(PEKEKK) polymer" is intended to denote any polymer of which more than 50 % by moles of the recurring units are recurring units (R_{PAEK}) of formula J'-L.

Preferably more than 75 % by moles, preferably more than 85 % by moles, preferably more than 95 % by moles, preferably more than 99 % by moles of the recurring units of the (PEKEKK) polymer are recurring units of formula J'-L. Most preferably all the recurring units of the (PEKEKK) polymer are recurring units of formula J'-L.

Excellent results were obtained when the (PAEK) polymer was a (PEEK) homopolymer, i.e. a polymer of which substantially all the recurring units of the (PEEK) polymer are recurring units of formula J'-A, wherein chain defects, or very minor amounts of other units might be present, being understood that these latter do not substantially modify the properties of the (PEEK) homopolymer.

Non limitative examples of commercially available polyaryletherketone (PAEK) resins suitable for the invention include the KETASPIRE® polyetheretherketone commercially available from Solvay Specialty Polymers USA, LLC.

The (PAEK) polymer can have a inherent viscosity (IV) of at
least 0.50 dl/g, preferably at least 0.60 dl/g, more preferably at least 0.70 dl/g, as measured in 95-98 % sulfuric acid (d= 1.84 g/ml) at a (PAEK) polymer concentration of 0.1 g/100 ml.

The IV of the (PAEK) polymer can notably be equal to or less
than 1.40 dl/g, preferably equal to or less than 1.30 dl/g, more preferably equal to or less than 1.20 dl/g, most preferably equal to or less than 1.15 dl/g, as measured in 95-98 % sulfuric acid (d= 1.84 g/ml) at a (PAEK) polymer concentration of 0.1 g/100 ml.

Good results have been obtained with (PAEK) polymers having an IV from 0.70 dl/g to 1.15 dl/g, as measured in 95-98 % sulfuric acid (d= 1.84 g/ml) at a (PAEK) polymer concentration of 0.1 g/100 ml.

The measurement is generally performed using a No 50 Cannon-Fleske viscometer; IV is measured at 25°C in a time less than 4 hours after dissolution.

The (PAEK) polymer has a melt viscosity of advantageously at
least 0.05 kPa.s, preferably at least 0.08 kPa.s, more preferably at least 0.1 kPa.s, still more preferably at least 0.12 kPa.s at 400°C and a shear rate of 1000 s⁻¹, as measured using a capillary rheometer in accordance with ASTM D3835.

As capillary rheometer, a Kayeness Galaxy V Rheometer (Model 8052 DM) can be used.

The PAEK polymer has a melt viscosity of advantageously at
most 1.00 kPa.s, preferably at most 0.80 kPa.s, more preferably at
most 0.70 kPa.s, even more preferably at most 0.60 kPa.s at 400°C and a shear rate of 1000 s⁻¹, as measured using a capillary rheometer in accordance with ASTM D3835.

The (PAEK) polymer can be prepared by any method known in the art for the manufacture of poly(aryl ether ketone)s.

### The nitride (NI)

Within the context of the present invention the mention "at least one nitride (NI)" is intended to denote one or more than one nitride (NI). Mixtures of nitrides (NI) can be advantageously used for the purposes of the invention.

For the purpose of the present invention, an "element" is intended to denote an element from the Periodic Table of the Elements.

The value of the electronegativity of an element that are to be taken into consideration for the purpose of the present invention are those reported in the Periodic Table of the Elements edited by J. Breysem, c/o VEL s.a., "Produits, appareillage et fournitures pour le laboratoire", printed in Belgium in February 1987.

Non limitative examples of nitrides (NI) of an element having an electronegativity (ε) of from 1.3 to 2.5 are listed « Handbook of Chemistry and Physics », CRC Press, 64th edition, pages B-65 to B-158. The nitride (NI) is boron nitride.

The Applicant has surprisingly found that the presence of the nitride (NI), as described above, is effective in enhancing the stiffness of the composition (C) while maintaining the ductility of an unfilled PAEK polymer, thereby offering said composition (C) of the invention superior properties which allows them to be very useful as being comprised in parts of oil and gas recovery articles.

The Applicant has found that the average particle size of the nitride (NI) may play a role in improving mechanical properties such as in particular the stiffness and the tensile elongation at break of the composition (C) and in improving the aesthetics aspects, especially in reducing the color of the composition (C) and increasing its whiteness.

The average particle size of the nitride (NI) is equal to or below 30 µm, preferably equal to or below 20 µm, more preferably equal to or below 18 µm, more preferably equal to or below 10 µm.

The average particle size of the nitride (NI) is preferably equal to or at least 0.05 µm, equal to or at least 0.1 µm, more preferably equal to or at least 0.2 µm, equal to or at least 1 µm.

The average particle size of the nitride (NI) is preferably from 1 µm to 20 µm, more preferably from 2 µm to 18 µm, more preferably from 2 µm to 10 µm.

An average particle size of the nitride (NI) of about 2.5 µm gave particularly good results.

The average particle size of the nitride (NI) is measured via light scattering techniques (dynamic or laser) using the respective equipment coming for example from the company Malvern (Mastersizer Micro or 3000) or using screen analysis according to DIN 53196.

### Optional ingredient

As mentioned above, the optional ingredient can be selected from the group consisting of colorants, pigments, light stabilizers, heat stabilizers, antioxidants, acid scavengers, processing aids, nucleating agents, internal lubricants and/or external lubricants, flame retardants, smoke-suppressing agents, anti-static agents, anti-blocking agents, conductivity additives and reinforcing additives.

These above mentioned optional ingredients are commonly known to the skilled in the art.

As non limitative examples of colorants mention can be made of watersoluble dyes, oil-soluble dyes, water-insoluble colored lakes, and mixtures thereof.

As non limitative examples of pigments mention can be made of titanium dioxide, zinc sulfide and zinc oxide.

As non limitative examples of light stabilizers mention can be made of UV absorbers and hindered amine light stabilizers.

As non limitative examples of antioxidants mention can be made of organic phosphites and phosphonites.

As non limitative examples of conductivity additives mention can be made carbon black and carbon nanofibrils.

As non limitative examples of reinforcing additives mention can be made of glass fibers, carbon fibers, wollastonite and mineral fillers different from the NI, as detailed above.

Glass fibers optionally comprised in polymer composition (C) may be chosen from the group composed of chopped strand A-, E-, C-, D-, S-, T- and R-glass fibers, as described in chapter 5.2.3, p. 43-48 of Additives for Plastics Handbook, 2nd edition, John Murphy. Said glass fibers may have a circular cross-section or a non-circular cross-section (such as an oval or rectangular cross-section). When the glass fibers used have a circular cross-section, they preferably have an average fiber diameter of 3 to 30 µm and particularly preferred of 5 to 12 µm. Different sorts of glass fibers with a circular cross-section are available on the market depending on the type of the glass they are made of.

As used herein, the term "carbon fiber" is intended to include graphitized, partially graphitized and ungraphitized carbon reinforcing fibers or a mixture thereof. Carbon fibers useful for the present invention can advantageously be obtained by heat treatment and pyrolysis of different polymer precursors such as, for example, rayon, polyacrylonitrile (PAN), aromatic polyamide or phenolic resin ; carbon fibers useful for the present invention may also be obtained from pitchy materials. The term "graphite fiber" intends to denote carbon fibers obtained by high temperature pyrolysis (over 2000°C) of carbon fibers, wherein the carbon atoms place in a way similar to the graphite structure. Carbon fibers useful for the present invention are preferably chosen from the group composed of PAN-based carbon fibers, pitch based carbon fibers, graphite fibers, and mixtures thereof.

Mineral fillers optionally comprised in polymer composition (C) may be chosen from a group consisting of talc, mica, kaolin, calcium carbonate, calcium silicate magnesium carbonate.

### Composition (C)

The total weight of the nitride (NI) in the composition (C) of the present invention is of at least 1.0 % wt., preferably at least 1.10 % wt., more preferably at least 2.0 % wt., particularly preferably at least 2.5 % wt. and even more preferably at least 5.0 % wt., based on the total weight of the composition (C).

In one embodiment, the total weight of the nitride (NI) in the composition (C) of the present invention is of at most 13 % wt., preferably at most 11 % wt., and most preferably at most 10.0 % wt., based on the total weight of the composition (C).

The total weight of the nitride (NI) in the composition (C) of the present invention ranges from 1 to 13 % wt., more preferably from 2 to 11 % wt., even more preferably from 2.5 to 10 % wt., based on the total weight of the composition (C).

The total weight of the (PAEK) polymer, based on the total weight of the composition (C), is advantageously equal to or above 60 %, preferably equal to or above 70 % ; more preferably equal to or above 80 %, more preferably equal to or above 85 %, most preferably equal to or above 90 %.

A preferred composition (C) of the invention thus includes a (PAEK) polymer, as above detailed, and more preferably a (PAEK) polymer comprising recurring units (R_{PAEK}) of formula (J'-A), as above detailed and boron nitride in an amount of 2.5 to 10 % wt., based on the total weight of the composition (C).

When the optional ingredient is present in the composition (C) of the invention, the total weight of the optional ingredient, based on the total weight of the composition (C), is advantageously equal to or above 0.1 %, preferably equal to or above 0.5 %, more preferably equal to or above 1 % and even more preferably more preferably equal to or above 2 %.

When present, the total weight of the optional ingredient, based on the total weight of the composition (C), is advantageously equal to or below 30 %, preferably below 20 %, more preferably below 10 % and even more preferably below 5 %.

For the purpose of the present invention, the expression "consisting essentially of' is to be understood to mean that any additional component different from the (PAEK) polymer, as detailed above, the nitride (NI), as detailed above, and the optional ingredient, as detailed above, is present in an amount of at most 1 % by weight, based on the total weight of the composition (C), so as not to substantially alter advantageous properties of the composition.

Thus, the Applicant has found that the composition (C) provides for significantly improved stiffness, temperature resistance and dielectric strength of the oil and gas recovery article parts and finished oil and gas recovery articles.

The composition (C) can be prepared by a variety of methods involving intimate admixing of the (PAEK) polymer and the nitride (NI) with any optional ingredient, as detailed above, desired in the formulation, for example by melt mixing or a combination of dry blending and melt mixing. Typically, the dry blending of the (PAEK) polymer and the nitride (NI), and optionally the optional ingredient, as above details, is carried out by using high intensity mixers, such as notably Henschel-type mixers and ribbon mixers.

So obtained powder mixture can comprise the (PAEK) polymer and the nitride (NI), and optionally the optional ingredient, in the weight ratios as above detailed, suitable for obtaining effective formation of the above described parts of an oil and gas recovery article, or can be a concentrated mixture to be used as masterbatch and diluted in further amounts of the (PAEK) polymer and the nitride (NI), and optionally the optional ingredient in subsequent processing steps.

It is also possible to manufacture the composition of the invention by further melt compounding the powder mixture as above described. As said, melt compounding can be effected on the powder mixture as above detailed, or preferably directly on the (PAEK) polymer and the nitride (NI), and optionally the optional ingredient. Conventional melt compounding devices, such as co-rotating and counter-rotating extruders, single screw extruders, co-kneaders, disc-pack processors and various other types of extrusion equipment can be used. Preferably, extruders, more preferably twin screw extruders can be used.

If desired, the design of the compounding screw, e.g. flight pitch and width, clearance, length as well as operating conditions will be advantageously chosen so that sufficient heat and mechanical energy is provided to advantageously fully melt the powder mixture or the ingredients as above detailed and advantageously obtain a homogeneous distribution of the different ingredients. Provided that optimum mixing is achieved between the bulk polymer and filler contents. It is advantageously possible to obtain strand extrudates which are not ductile of the composition (C) of the invention. Such strand extrudates can be chopped by means e.g. of a rotating cutting knife after some cooling time on a conveyer with water spray. Thus, for example the composition (C) which may be present in the form of pellets or beads can then be further used for the manufacture of the above described part of the oil and gas recovery article.

The composition (C) is processed by injection molding. Other post-processing techniques, including machining, cutting, sectioning, skiving, and the like, maybe applied, if needed to an injection molded article for obtaining the part having the required final shape, without this diverging from the scope of the present invention.

The Applicant has now found that said oil and gas recovery article parts and finished oil and gas recovery article comprising the composition (C) of the present invention have excellent mechanical properties, in particular having an outstanding combination of high stiffness and high toughness and that over a broad range of temperature (i.e. from about 25°C until 300°C), good processability, high chemical resistance, high thermal resistance and long term thermal stability as well as higher dielectric strength than is possible with unfilled PAEK polymers. Thus said articles can be employed successfully in the oil and gas recovery manufacturing activities requiring the above mentioned severe operating conditions of high temperature, high pressure, harsh chemicals and other extreme conditions while at the same time having a more cost effective article fabrication.

The invention will be now described in more details with reference to the following examples, whose purpose is merely illustrative and not intended to limit the scope of the invention.

### Raw materials

KetaSpire® PEEK KT-820P is polyetheretherketone polymer commercially available from Solvay Specialty Polymers USA, LLC.

Boron Nitride, Boronid® S1-SF commercially available from ESK Ceramics, GmbH, average particle size of 2.5 µm.

Boron Nitride, Boronid® S15 commercially available from ESK Ceramics, GmbH, average particle size of 15 µm.

Carbon Fiber, Sigrafil C30 APS 006 from SGL Corporation

Talc, Mistron Vapor R, commercially available from Luzenac America

### General description of the compounding process of PEEK resins

A dry blend of PEEK resins with the desired amounts of Boronid® S1-SF or Boronid® S15 were prepared by first tumble blending for about 20 minutes, followed by melt compounding using an 25 mm Berstorff co-rotating partially intermeshing twin screw extruder having an L/D ratio of 40:1. The extruder had 8 barrel sections with barrel sections 2 through 8 being heated sections. Vacuum venting was applied at barrel section 7 with 18-20 in of vacuum during compounding to strip off moisture and any possible residual volatiles from the compound. The compounding temperature profile was such that barrel sections 2-5 were set at 330°C while barrel sections 5-8 and the die adapter were set at 340°C. The screw speed used 180 throughout and the throughput rate was 6.8-3.2 kg/h (15-17 lb/hr), whereas the melt temperature, measured manually for each formulation molten extrudate, at the exit of the extruder die ranged from 398 to 402°C. The extrudate for each formulation was cooled in a water trough and then pelletized using a pelletizer. The thus obtained pellets of the four blends were next dried for 4 hours in a desiccated air oven at 150°C and then subjected to injection molding to prepare standard test specimens for mechanical and other testing.

Said pellets were injection-molded to produce ASTM test specimens using a Toshiba 150 ton injection molding machine following standard conditions and guidelines for KetaSpire KT-820 PEEK resin provided by the supplier Solvay Specialty Polymers.

Mechanical properties were tested for all the formulations using injection molded 0.3175 cm (0.125 inch) thick ASTM test specimens which consisted of 1) Type I tensile bars, 2) 12.7 cm x 1.27 cm x 0.3175 cm (5 in x 0.5 in x 0.125 in) flexural bars, and 3) 10.16 cm x 10.16 cm x 0.3175 cm (4 in x 4 in x 0.125 in) plaques for the instrumented impact (Dynatup) testing.

The following ASTM test methods were employed in evaluating all nine compositions :
- D638 : Tensile properties using a test speed of 5.08 cm/min (2 in/min)
- D790 : Flexural properties
- D256 : Izod impact resistance (notched)
- D4812 : Izod impact resistance (unnotched)
- D3763 : Instrumented impact resistance also known by the name Dynatup impact
- D648 : Heat deflection temperature (HDT)
- D5279 : DMA Storage Modulus at 200°C (Pa)

HDT was measured at an applied stress of 1.82x10⁶ Pa (264 psi) and using 0.3175 cm (0.125 in)-thick flexural specimens annealed at 200°C for 2 hours to assure uniform crystallinity and removal of residual molded-in stresses in the parts which can otherwise compromise the accuracy of the measurement.

The color of 10.16 cm x 10.16 cm x 0.3175 cm (4 in x 4 in x 0.125) injection molded plaques injection molded color plaques was measured according to ASTM E308-06 using illuminant D65 (white light simulating daylight) at 10° angle (1964 CIE).

L*, a* and b* color coordinates were measured using a Gretag Macbeth Color Eye Ci5 Spectrophotometer, with tribeam diffuse/8 "6" sphere optical geometry, a bandpass of 10 nm, a spectral range of 360 nm to 750 nm per CIE Lab standards using illuminant D65 and a 10 degree observer. Thus, the L, a and b color coordinates measured by this test correspond to the lightness scale (L), green-red hue scale (a) and the blue-yellow hue scale (b).

Dielectric strength measurements according to the D149 ASTM method were carried out for the formulations of comparative example 1 and examples 4, 5, 6 and 7 on 10.16 cm x 10.16 cm x 0.3175 cm (4 in x 4 in x 0.125 in) injection molded thick ASTM test specimens. The results are shown in Table 1.

Composition, mechanical properties, color properties and physical properties of the nine compositions, under the form of injection molded specimens, are summarized in Table 1.

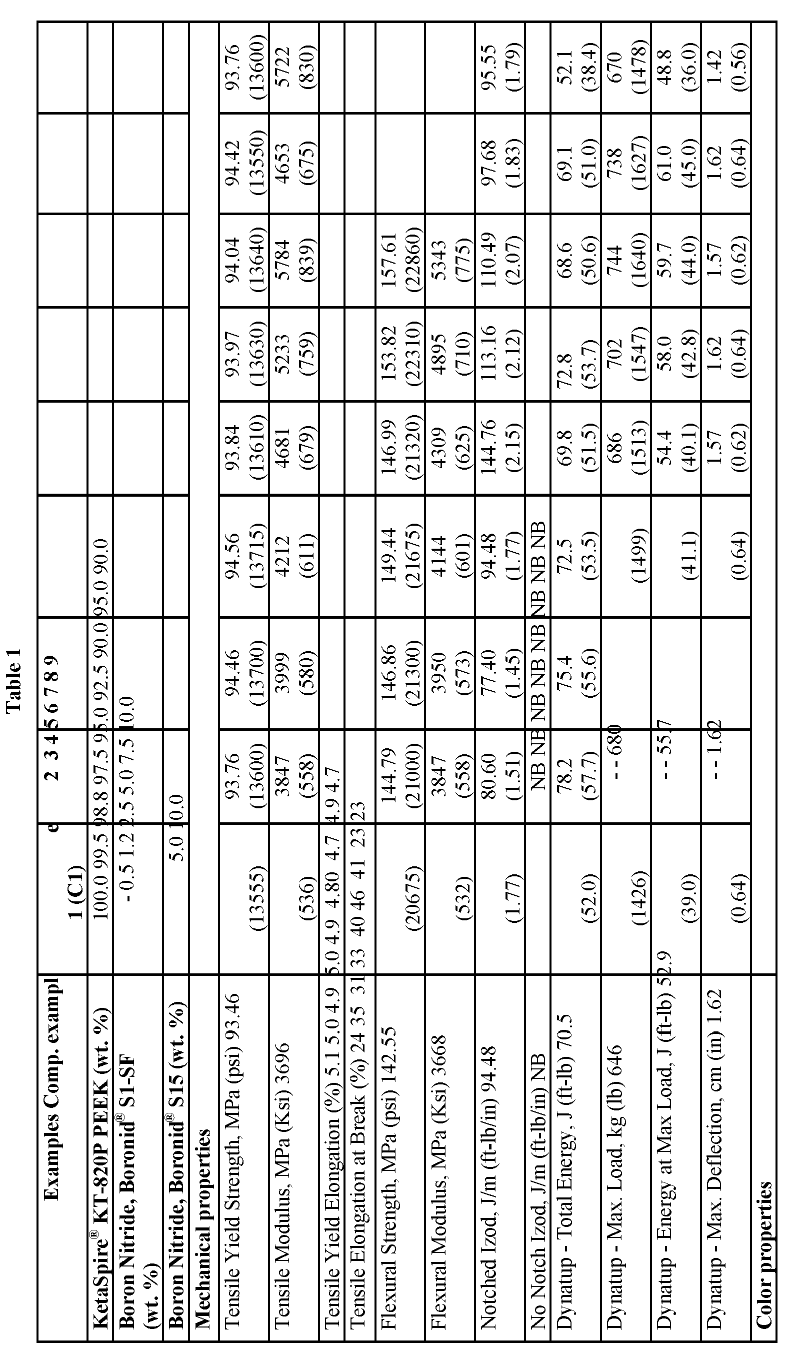

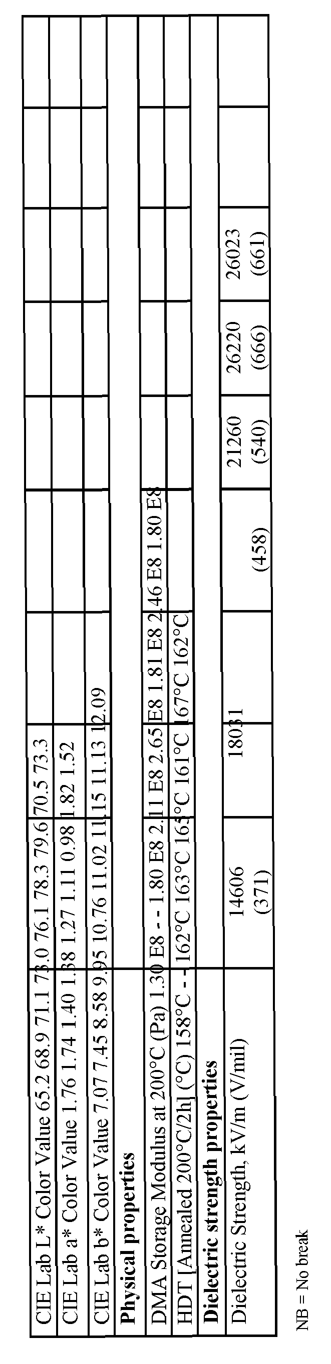

The Coefficient of linear thermal expansion (CLTE) measurements were carried by thermo-mechanical analysis (TMA) according to the E831 ASTM standard method. The results are summarized in Table 2.

**Table 2 : Coefficient of linear thermal expansion (CLTE)**

| | **Comparative Example 1 (C1)** | | **Example 7** | |
|---|---|---|---|---|
| Direction | Flow | Transverse | Flow | Transverse |
| *CLTE at Temperature Range* | | | | |
| -50 - 0°C (ppm/°C) | 35.1 | 45.4 | 24.4 | 35.7 |
| 0 - 50°C (ppm/°C) | 40.4 | 49.0 | 26.2 | 40.4 |
| 50 - 100°C (ppm/°C) | 43.6 | 54.0 | 28.3 | 46.1 |
| 100 - 150°C (ppm/°C) | 45.9 | 57.7 | 29.3 | 50.6 |
| Average -50 to +150°C (ppm/°C) | 41.2 | 51.6 | 27.1 | 43.2 |
| % Reduction Relative to comparative example (C1) | --- | --- | 33 | 16 |
| Overall % Reduction Relative to comparative example (C1)* | --- | | 25 | |

| | | | | |
|---|---|---|---|---|
| * Average of reductions in flow and transverse directions | | | | |

### Additional Examples

Test specimens for performing ASTM mechanical properties were prepared by two different methods: 1) direct injection molding into 3.2 mm (0.125 in) thick ASTM tensile and flexural specimens and 2) extrusion into 1 inch diameter rod stock of the formulation followed by machining 3.2 mm (0.125 in) thick tensile and flexural specimens from the center of the extruded rods. Extruded and machined specimens were tested alongside the injection molded ones. The parts tested for comparative examples 1-3 and example 7 have thus the exact same geometry, the only difference being the processing technique used for their manufacture.

The tensile, flexural and Izod impact properties for the test parts prepared by the two different methods and the two materials are summarized in Table 3. Surprisingly, we found that the PEEK-boron nitride formulation only exhibits superior properties to those of neat PEEK when the material is processed by direct injection molding. In other terms, a composition free from nitride, when injection molded, is not endowed with mechanical performances improved over those achievable through extrusion molding and machining. On the other side, a composition comprising a PAEK material combined with a nitride deliver through injection molding technique shaped articles which are endowed with significantly improved Tensile properties and impact properties. When the test parts are produced by machining from extruded stock shape, the material exhibits very low elongation at break indicating brittle mechanical behavior. The unnotched Izod impact test also shows the parts produced from extrusion and machining to be brittle, whereas the same was not true when the PEEK-boron nitride formulation was produced by injection molding. The invention in this case thus encompasses formulations of PEEK modified with boron nitride and processed specifically by injection molding to produce the useful articles with performance surpassing that of the state of the art.

**Table 3:_Mechanical properties of PEEK and PEEK modified with 10% boron nitride from injection molded ASTM specimens and from ASTM parts that were machined out of 1 inch extruded rods.**

| **Examples** | **Comp. Example 1 (C1)** | **Comp. Example 2 (C2)** | **Example 7** | **Comp. Example 3 (C3)** |
|---|---|---|---|---|
| **KetaSpire KT-820P PEEK (wt. %)** | 100.0 | 100.0 | 90.0 | 90.0 |
| **Boron Nitride, Boronid® S1-SF (wt. %)** | - | - | 10.0 | 10.0 |

| **Processing Method** | Injection Molding | Extrusion and Machining | Injection Molding | Extrusion and Machining |
|---|---|---|---|---|
| Tensile Yield Strength, MPa (psi) | 93.4 | 106.2 | 94.0 | 87.6 |
| | (13555) | (15400) | (13640) | (12700) |
| Tensile Modulus, MPa (Ksi) | 3695 | 3909 | 5785 | 5157 |
| | (536) | (567) | (839) | (748) |
| Tensile Yield Elongation (%) | 5.1 | 5.2 | 4.7 | 3.5 |
| Tensile Elongation at Break (%) | 24 | 21 | 41 | 5.5 |
| Flexural Strength, MPa(psi) | 142.5 | 156.5 | 157.6 | 159.3 |
| | (20675) | (22700) | (22860) | (23100) |
| Flexural Modulus, MPa(Ksi) | 3668 | 3957 | 5343 | 5184 |
| | (532) | (574) | (775) | (752) |
| Notched Izod, J/m (ft-lb/in) | 94.5 | 69.4 | 110.5 | 83.8 |
| | (1.77) | (1.30) | (2.07) | (1.57) |
| No Notch Izod, J/m (ft-lb/in) | No Break | No Break | No Break | 677.9 |
| | | | | (12.7) |

## Claims

1. A method for recovering oil and/or gas including using at least one oil and gas recovery article comprising at least one part made from injection molding a composition [composition (C)] consisting essentially of:
- from 50 to 99.5 % by weight (wt. %) of at least one polyaryletherketone polymer [(PAEK) polymer, herein after];
- at least one nitride (NI) of an element having an electronegativity (ε) of from 1.3 to 2.5, as listed in « Handbook of Chemistry and Physics », CRC Press, 64^{th} edition, pages B-65 to B-158; and
- from 0 to 35.0 % by weight (wt. %) of at least one optional ingredient selected from the group consisting of colorants, pigments, light stabilizers, heat stabilizers, antioxidants, acid scavengers, processing aids, nucleating agents, internal lubricants and/or external lubricants, flame retardants, smoke-suppressing agents, anti-static agents, anti-blocking agents, conductivity additives and reinforcing additives; and
all wt. % are relative to the total weight of the composition (C),
wherein the nitride (NI) is boron nitride, the average particle size of said nitride (NI) is equal to or below 30 µm, and wherein the total weight of the nitride (NI) in the composition (C) ranges from 1 to 13 % wt., based on the total weight of the composition (C);
said method comprising at least one of the operations selected from the group consisting of:
(a) drilling at least one borehole for exploring or exploiting an oil and/or gas reservoir in a subterranean formation using at least one oil and gas recovery article as defined above;
(b) completing at least one well using at least one oil and gas recovery article as defined above;
(c) transporting oil and/or gas from an oil and/or gas reservoir in a subterranean formation to the ground level, using at least one oil and gas recovery article as defined above.

2. The method according to claim 1, wherein more than 50 % moles of recurring units of (PAEK) polymer are recurring units (R_{PAEK}) selected from those of formulae (J-A) to (J-O), herein below : 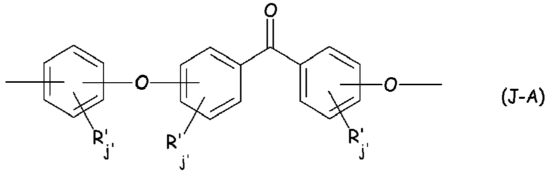 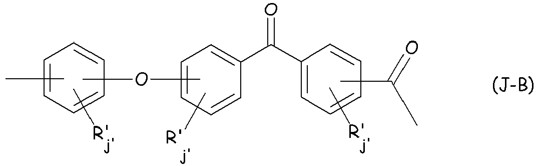 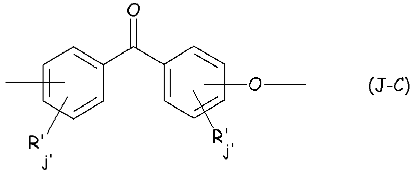 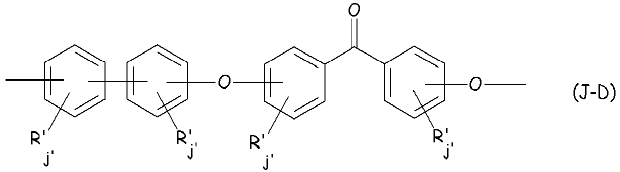 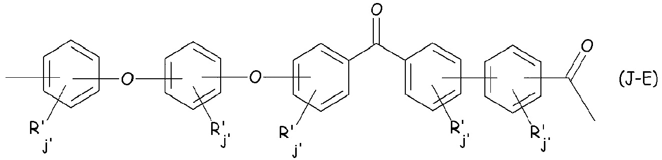 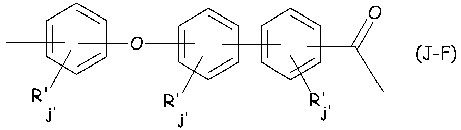 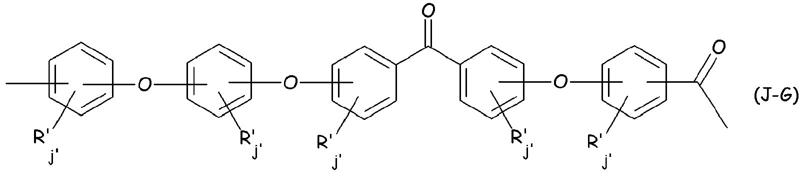 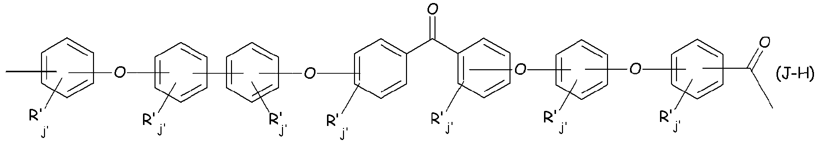 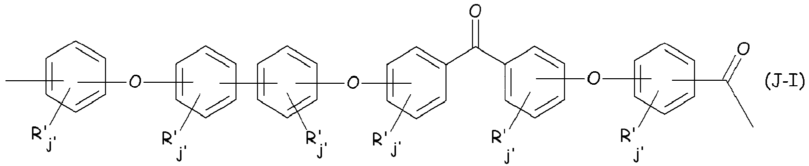 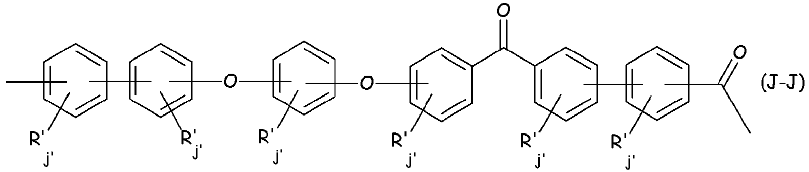 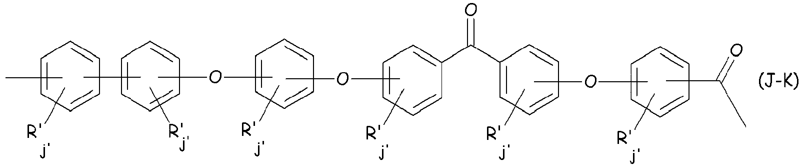 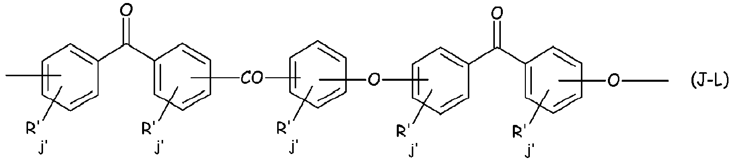 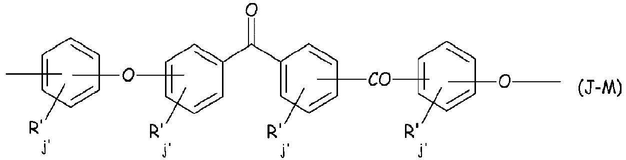 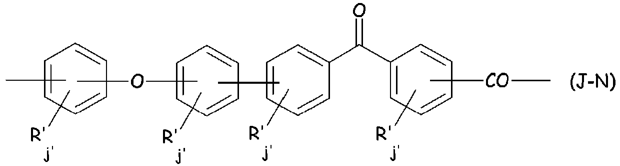 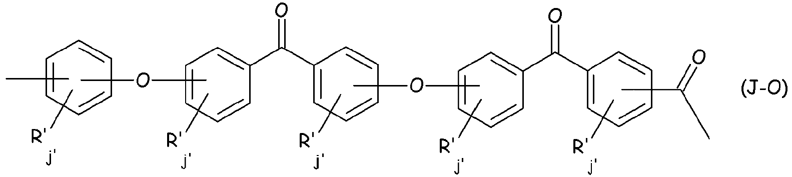 wherein :
- each of R', equal to or different from each other, is selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium ;
- j' is zero or is an integer from 0 to 4.

3. The method according to any one of claims 1 or 2, wherein more than 50 % moles of recurring units of the (PAEK)polymer are recurring units (R_{PAEK}) selected from those of formulae (J'-A) to (J'-O) herein below :

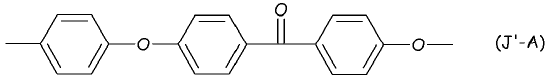

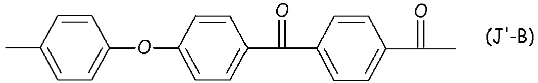

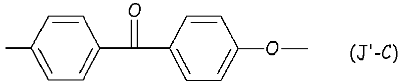

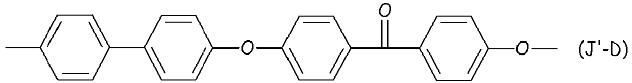

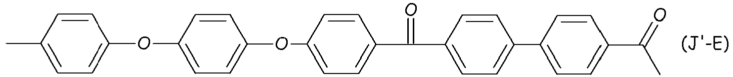

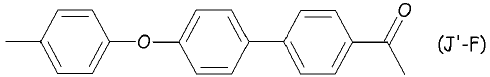

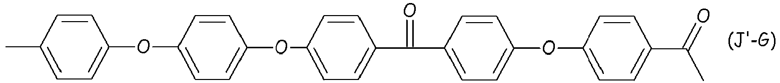

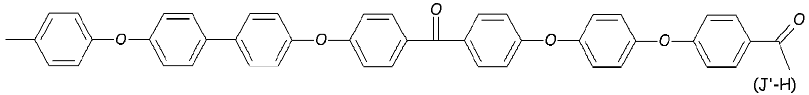

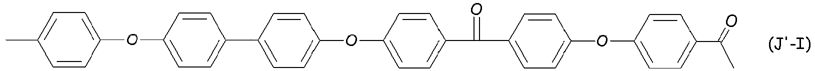

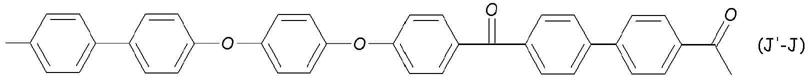

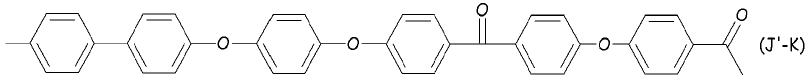

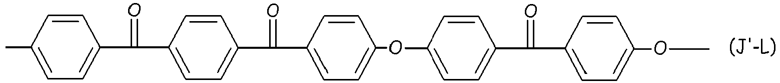

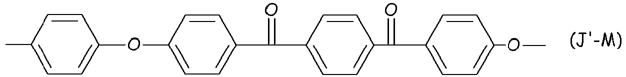

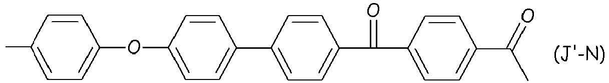

4. The method according to any one of claims 1 to 3, wherein the total weight of the optional ingredient, based on the total weight of the composition (C), is equal to or above 0.5 % and equal to or below 30 %.

5. The method according to any one of claims 1 to 4, wherein the optional ingredient is a conductivity additive, preferably chosen from a group consisting of carbon black and carbon nanofibrils.

6. The method according to any one of claims 1 to 4, wherein the optional ingredient is a reinforcing additive, preferably chosen from a group consisting of glass fibers, carbon fibers, wollastonite and mineral fillers different from the NI, as detailed above.

7. The method according to any one of claims 1 to 6 wherein said oil and gas recovery article is a drilling system, a drilling rig, a compressor system, a pumping system, a motor system, a sensor, a control system, a liner hanger a packer system, a pipe system, a valve system, a tubing system, or a casing system.

8. The method according to claim 7 wherein the pipe system is a pipe, a flexible riser, a pipe-in-pipe, a pipe liner, a subsea jumper, a spool or an umbilical, preferably a pipe, a flexible riser or pipe liner.

9. The method according to any one of claims 1 to 8 wherein said part is an oil and gas recovery housing, an electrical connector, a switch, a circuit breaker.

10. The method of anyone of the preceding claims, said method comprising drilling at least one borehole using a drilling rig equipment, said drilling rig comprising components selected from the group consisting of a drill pipe or string (5), a drill bit (7), a rotary table (6) or a top drive, a draw-works section (13), and a mud pump (11), wherein at least one of said components is the oil and gas recovery article.

## Patentansprüche

1. Verfahren zur Förderung von Öl und/oder Gas, das die Verwendung von mindestens einem Artikel zur Förderung von Öl und Gas einschließt, der mindestens ein Teil umfasst, das durch Spritzgießen einer Zusammensetzung [Zusammensetzung (C)] hergestellt wurde, die im Wesentlichen aus Folgendem besteht:
- 50 bis 95 Gewichts-% (Gew.□%) von mindestens einem Polyaryletherketon-Polymer [nachstehend (PAEK)-Polymer] ;
- mindestens einem Nitrid (NI) von einem Element mit einer wie im "Handbook of Chemistry and Physics", CRC Press, 64. Auflage, Seiten B-65 bis B-158 aufgeführten Elektronegativität (ε) von 1,3 bis 2,5; und
- 0 bis 35 Gewichts-% (Gew.11%) von mindestens einem fakultativen Bestandteil, der aus der Gruppe bestehend aus Farbmitteln, Pigmenten, Lichtstabilisatoren, Wärmestabilisatoren, Antioxidantien, Säurefängern, Verarbeitungshilfsmitteln, Nukleierungsmitteln, inneren Gleitmitteln und/oder äußeren Gleitmitteln, Flammschutzmitteln, Rauchunterdrückungsmitteln, Antistatikmitteln, Antiblockiermitteln, Leitfähigkeitsadditiven und Verstärkungsadditiven ausgewählt ist; und
alle Gew.□% relativ zu dem Gesamtgewicht der Zusammensetzung (C) angegeben sind,
wobei es sich bei dem Nitrid (NI) um Bornitrid handelt, die durchschnittliche Teilchengröße des Nitrids (NI) gleich 30 µm ist oder darunter liegt und wobei das Gesamtgewicht des Nitrids (NI) in der Zusammensetzung (C) 1 bis 13 Gew.□%, bezogen auf das Gesamtgewicht der Zusammensetzung (C), beträgt;
wobei das Verfahren mindestens einen der aus der folgenden Gruppe ausgewählten Arbeitsgänge umfasst:
(a) Bohren von mindestens einem Bohrloch zur Erkundung oder Erschließung einer Öl- und/oder Gaslagerstätte in einer unterirdischen Formation unter Verwendung von mindestens einem wie oben definierten Artikel zur Förderung von Öl und Gas;
(b) Komplettieren von mindestens einer Bohrung unter Verwendung von mindestens einem wie oben definierten Artikel zur Förderung von Öl und Gas;
(c) Befördern von Öl- und/oder Gas aus einer Öl- und/oder Gaslagerstätte in einer unterirdischen Formation unter Verwendung von mindestens einem wie oben definierten Artikel zur Förderung von Öl und Gas.

2. Verfahren nach Anspruch 1, wobei es sich bei mehr als 50 Mol-% der Wiederholungseinheiten des (PAEK)-Polymers um Wiederholungseinheiten (R_{PAEK}) handelt, die aus denjenigen der nachstehenden Formeln (J-A) bis (J-O) ausgewählt sind: 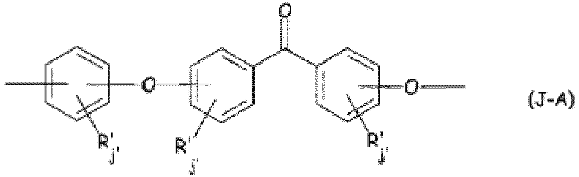 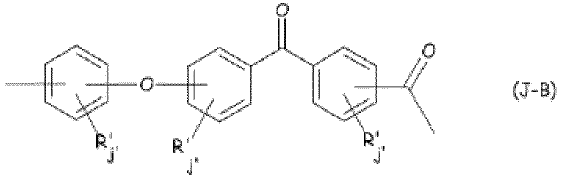 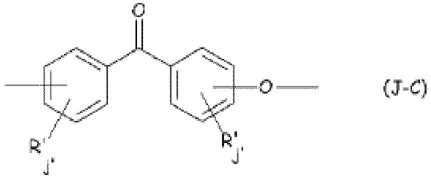 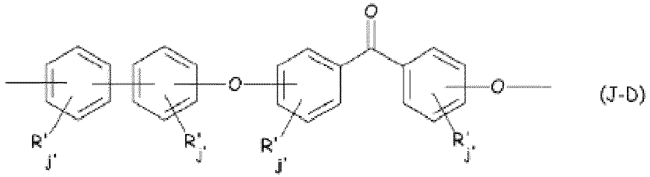 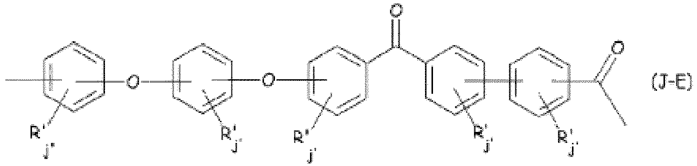 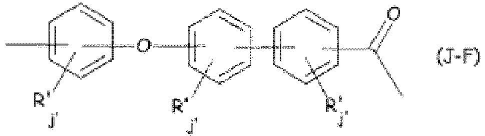 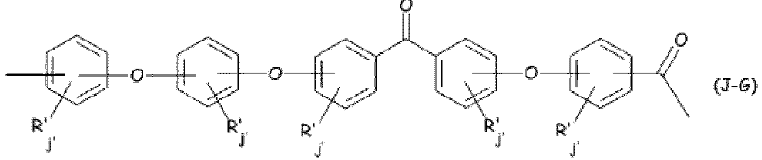 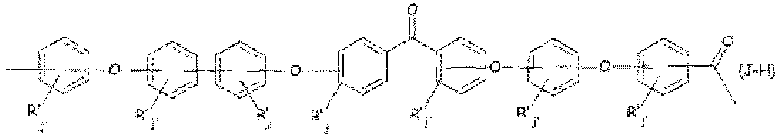 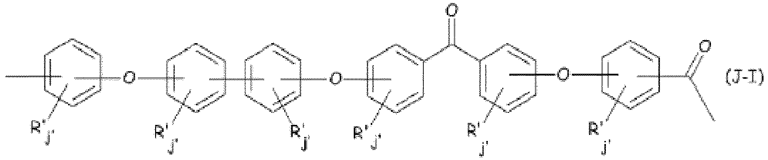 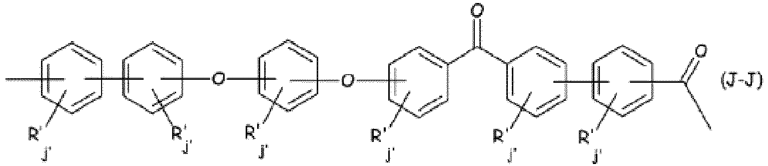 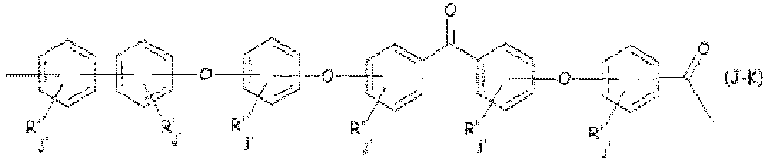 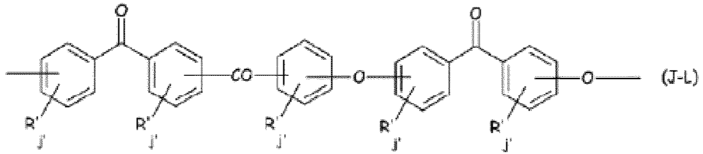 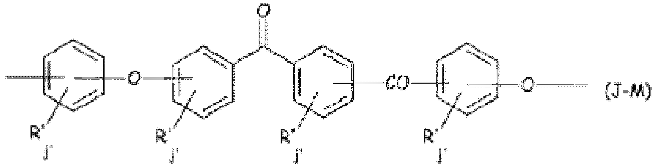 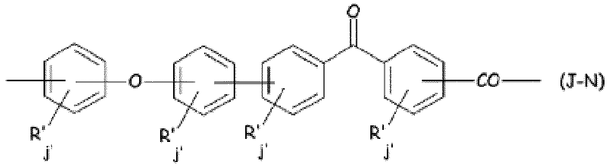 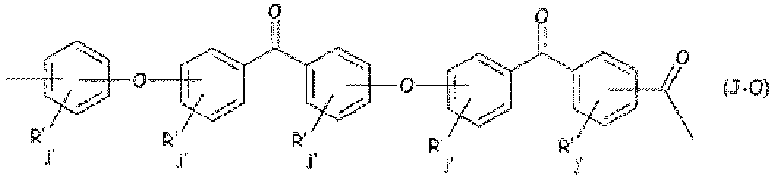 wobei:
- R' jeweils, gleich oder voneinander verschieden, aus der Gruppe bestehend aus Halogen, Alkyl, Alkenyl, Alkinyl, Aryl, Ether, Thioether, Carbonsäure, Ester, Amid, Imid, Alkali- oder Erdalkalimetallsulfonat, Alkylsulfonat, Alkali- oder Erdalkalimetallphosphonat, Alkylphosphonat, Amin und quaternärem Ammonium ausgewählt ist;
- j' Null ist oder eine ganze Zahl von 0 bis 4 ist.

3. Verfahren nach einem der Ansprüche 1 oder 2, wobei es sich bei mehr als 50 Mol-% der Wiederholungseinheiten des (PAEK)-Polymers um Wiederholungseinheiten (R_{PAEK}) handelt, die aus denjenigen der nachstehenden Formeln (J'-A) bis (J'-O) ausgewählt sind:

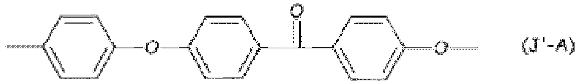

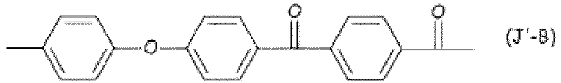

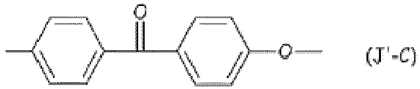

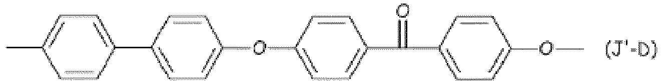

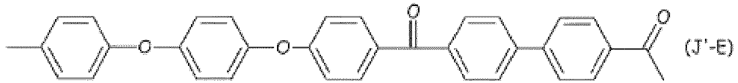

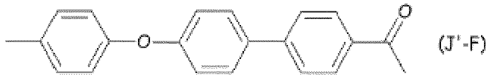

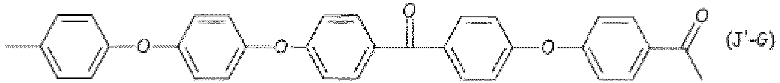

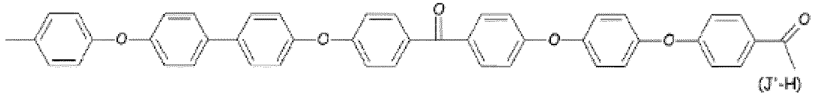

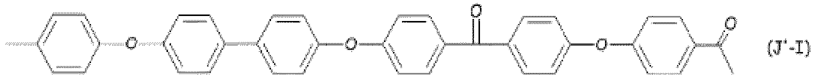

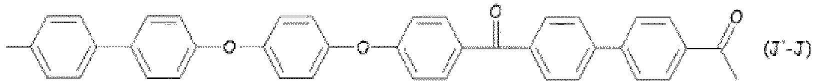

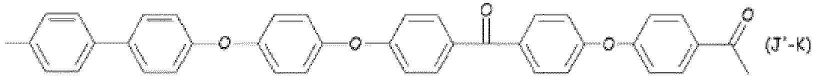

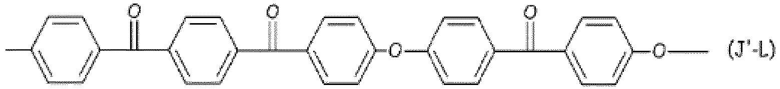

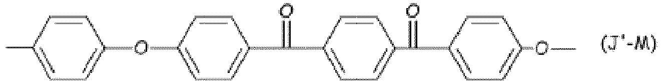

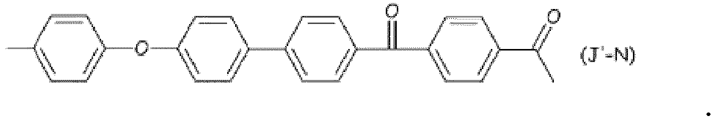

4. Verfahren nach einem der Ansprüche 1 bis 3, wobei das Gesamtgewicht des fakultativen Bestandteils, bezogen auf das Gesamtgewicht der Zusammensetzung (C), gleich 0,5 % ist oder darüber liegt und gleich 30 % ist oder darunter liegt.

5. Verfahren nach einem der Ansprüche 1 bis 4, wobei es sich bei dem fakultativen Bestandteil um ein Leitfähigkeitsadditiv handelt, vorzugsweise ausgesucht aus einer Gruppe bestehend aus Ruß und Kohlenstoff-Nanofibrillen.

6. Verfahren nach einem der Ansprüche 1 bis 4, wobei es sich bei dem fakultativen Bestandteil um ein Verstärkungsadditiv handelt, vorzugsweise ausgesucht aus einer Gruppe bestehend aus Glasfasern, Kohlefasern, Wollastonit und mineralischen Füllstoffen, die von dem wie oben erläuterten NI verschieden sind.

7. Verfahren nach einem der Ansprüche 1 bis 6, wobei es sich bei dem Artikel zur Förderung von Öl und Gas um ein Bohrsystem, eine Bohranlage, ein Verdichtersystem, ein Pumpsystem, ein Motorsystem, einen Sensor, ein Steuersystem, eine Lineraufhängung, ein Packersystem, ein Rohrsystem, ein Ventilsystem, ein Verrohrungssystem oder ein Futerrohrsystem handelt.

8. Verfahren nach Anspruch 7, wobei es sich bei dem Rohrsystem um ein Rohr, eine flexible Steigleitung, ein Rohr-in-Rohr, einen Rohrliner, eine Untersee-Kupplung, eine Rollen- oder Nabelleitung, vorzugsweise ein Rohr, eine flexible Steigleitung oder einen Rohrliner, handelt.

9. Verfahren nach einem der Ansprüche 1 bis 8, wobei es sich bei dem Teil um ein bei der Förderung von Öl und Gas eingesetztes Gehäuse, einen elektrischen Verbindungsstecker, einen Schalter, einen Leistungsschalter handelt.

10. Verfahren nach einem der vorhergehenden Ansprüche, wobei man bei dem Verfahren mindestens ein Bohrloch unter Verwendung von Bohranlagegerätschaften bohrt, wobei die Bohranlage Komponenten umfasst, die aus der Gruppe bestehend aus einem Bohrrohr oder -strang (5), einem Bohrkopf (7), einem Drehteller (6) oder einem Kraftdrehkopf, einem Hebewerkabschnitt (13) und einer Spülpumpe (11) ausgewählt sind, wobei es sich bei mindestens einem der Komponenten um den Artikel zur Förderung von Öl und Gas handelt.

## Revendications

1. Procédé pour la récupération de pétrole et/ou de gaz comportant l'utilisation d'au moins un article de récupération d'huile et de gaz comprenant au moins une partie préparée par le moulage par injection d'une composition [composition (C)] constituée essentiellement :
- de 50 à 99,5 % en poids (% en poids) d'au moins un polymère de type polyaryléthercétone [polymère (PAEC), ci-après] ;
- d'au moins un nitrure (NI) d'un élément possédant une électronégativité (ε) allant de 1,3 à 2,5, comme listé dans « Handbook of Chemistry and Physics », CRC Press, 64^{e} édition, page B-65 à B-158 ; et
- de 0 à 35,0 % en poids (% en poids) d'au moins un ingrédient éventuel choisi dans le groupe constitué par des colorants, des pigments, des photostabilisants, des stabilisants à la chaleur, des antioxydants, des capteurs d'acide, des auxiliaires de traitement, des agents de nucléation, des lubrifiants internes et/ou des lubrifiants externes, des retardateurs de flamme, des agents de suppression de fumée, des agents antistatiques, des agents antiblocage, des additifs de conductivité et des additifs de renforcement ; et
tous les % en poids étant donnés par rapport au poids total de la composition (C),
le nitrure (NI) étant le nitrure de bore, la taille moyenne de particule dudit nitrure (NI) étant égale ou inférieure à 30 µm, et le poids total du nitrure (NI) dans la composition (C) se situant dans la plage de 1 à 13 % en poids, sur la base du poids total de la composition (C) ;
ledit procédé comprenant au moins l'une des opérations choisies dans le groupe constitué par :
(a) le forage d'au moins un puits de forage pour l'exploration ou l'exploitation d'un gisement de pétrole et/ou de gaz dans une formation souterraine à l'aide d'au moins un article de récupération de pétrole et de gaz tel que défini ci-dessus ;
(b) la terminaison d'au moins un puits à l'aide d'au moins un article de récupération de pétrole et de gaz tel que défini ci-dessus ;
(c) le transport de pétrole et/ou de gaz à partir d'un gisement de pétrole et/ou de gaz dans une formation souterraine jusqu'au niveau du sol, à l'aide d'au moins un article de récupération de pétrole et de gaz tel que défini ci-dessus.

2. Procédé selon la revendication 1, plus de 50 % en moles de motifs répétitifs de polymère (PAEC) étant des motifs répétitifs (R_{PAEC}) choisis parmi ceux des formules (J-A) à (J-O), ci-dessous : 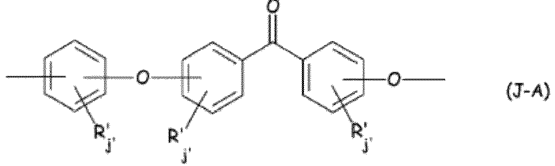 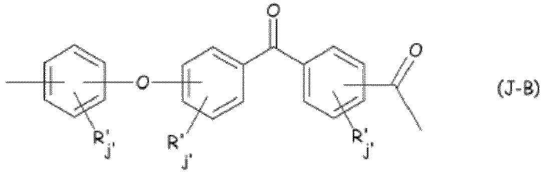 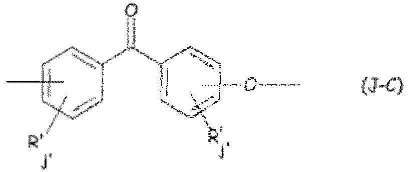 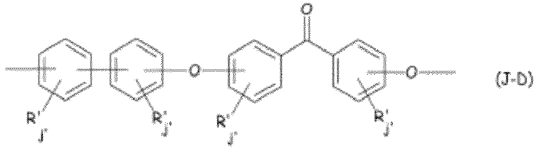 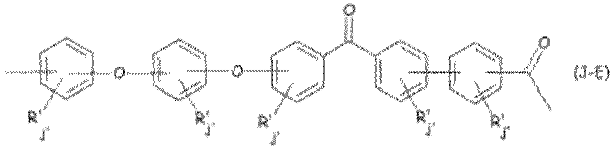 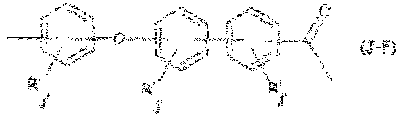 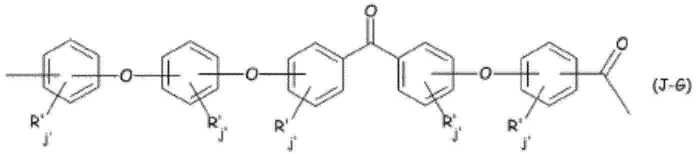 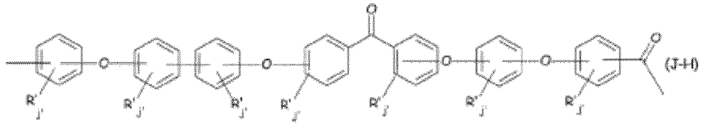 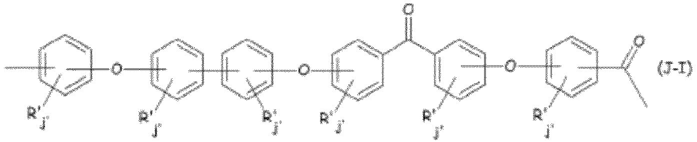 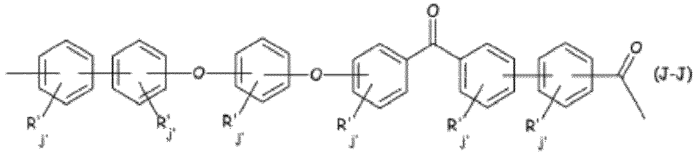 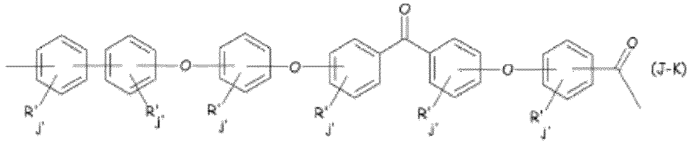 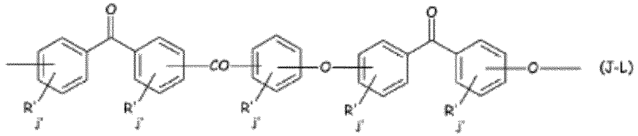 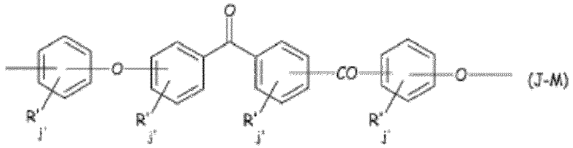 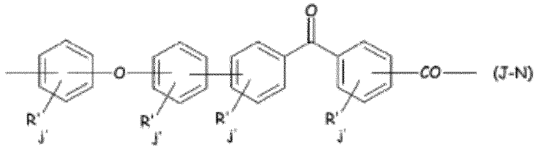 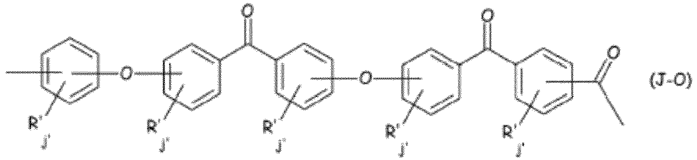
- chacun parmi R', identiques ou différents les uns des autres, étant choisi dans le groupe constitué par halogène, alkyle, alcényle, alcynyle, aryle, éther, thioéther, acide carboxylique, ester, amide, imide, sulfonate de métal alcalin ou alcalino-terreux, sulfonate d'alkyle, phosphonate de métal alcalin ou alcalino-terreux, phosphonate d'alkyle, amine et ammonium quaternaire ;
- j' étant zéro ou un entier de 0 à 4.

3. Procédé selon l'une quelconque des revendications 1 et 2, plus de 50 % en moles de motifs répétitifs du polymère (PAEC) étant des motifs répétitifs (R _{PAEC}) choisis parmi ceux des formules (J'-A) à (J'-O), ci-dessous :

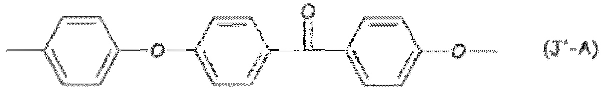

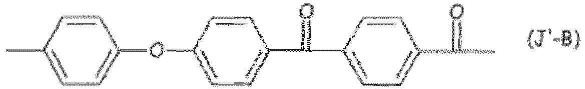

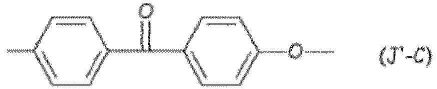

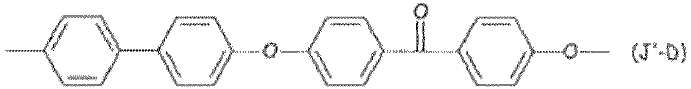

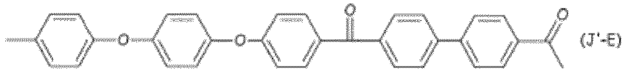

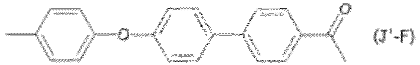

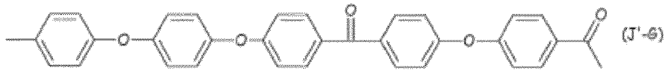

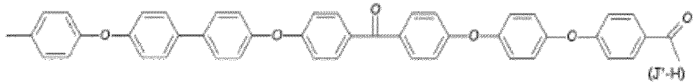

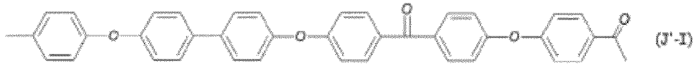

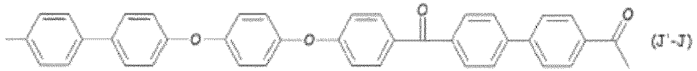

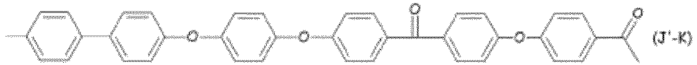

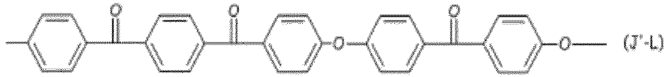

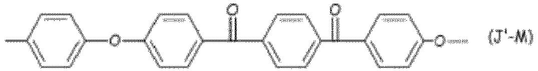

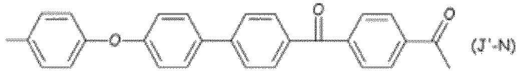

4. Procédé selon l'une quelconque des revendications 1 à 3, le poids total de l'ingrédient éventuel, sur la base du poids total de la composition (C), étant égal ou supérieur à 0,5 % et égal ou inférieur à 30 %.

5. Procédé selon l'une quelconque des revendications 1 à 4, l'ingrédient éventuel étant un additif de conductivité, préférablement choisi dans un groupe constitué par le noir de carbone et des nanofibriles de carbone.

6. Procédé selon l'une quelconque des revendications 1 à 4, l'ingrédient éventuel étant un additif de renforcement, préférablement choisi dans un groupe constitué par des fibres de verre, des fibres de carbone, de la wollastonite et des charges minérales différentes du NI, tel que détaillé ci-dessus.

7. Procédé selon l'une quelconque des revendications 1 à 6, ledit article de récupération de pétrole et de gaz étant un système de forage, une plate-forme de forage, un système de compresseur, un système de pompage, un système de moteur, un capteur, un système de commande, une suspension de chemise, un système de garniture d'étanchéité, un système de conduites, un système de valves, un système de tuyaux, ou un système de coffrage.

8. Procédé selon la revendication 7, le système de conduites étant une conduite, une colonne montante flexible, une conduite à double enveloppe, un revêtement de conduite, un jumper sous-marin, un enrouleur ou une liaison ombilicale, préférablement une conduite, une colonne montante flexible ou une conduite à double enveloppe.

9. Procédé selon l'une quelconque des revendications 1 à 8, ladite partie étant un boîtier de récupération de pétrole et de gaz, un connecteur électrique, un commutateur, un disjoncteur.

10. Procédé selon l'une quelconque des revendications précédentes, ledit procédé comprenant le forage d'au moins un puits à l'aide d'un équipement de plate-forme de forage, ladite plate-forme de forage comprenant des composants choisis dans le groupe constitué par une conduite ou un train de tiges de forage (5), un trépan (7), une table rotative (6) ou un entraînement de surface, un treuil de forage (13), et une pompe à boue (11), au moins l'un parmi lesdits composants étant l'article de récupération de pétrole et de gaz.
